(19) Europäisches Patentamt
European Patent Office
Office européen des brevets

(11) **EP 4 654 493 A1**

(12) **EUROPEAN PATENT APPLICATION**

(43) Date of publication:
26.11.2025  Bulletin 2025/48

(21) Application number: 25176187.0

(22) Date of filing: **13.05.2025**

(51) International Patent Classification (IPC):
*H04B 10/079* $^{(2013.01)}$   *G01D 5/353* $^{(2006.01)}$
*G01H 9/00* $^{(2006.01)}$

(52) Cooperative Patent Classification (CPC):
**H04B 10/0791; G01H 9/004**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **16.05.2024  TR 2024006029**

(71) Applicant: **Aselsan Elektronik Sanayi ve Ticaret
Anonim
Sirketi
06200 Ankara (TR)**

(72) Inventors:
• **OZFIDAN, HASAN BERAT**
  **Ankara (TR)**
• **DAGASAN, ABDULSAMET**
  **Ankara (TR)**
• **KABAS, BILAL**
  **Ankara (TR)**

(74) Representative: **Yamankaradeniz, Kemal
Destek Patent, Inc.
Maslak Mah.,
Büyükdere Cad., No: 243,
Kat: 13, Spine Tower, Sariyer,
34485 Istanbul (TR)**

(54) **A METHOD FOR FIBER OPTIC CABLE END POINT DETECTION IN DISTRIBUTED ACOUSTIC SENSING SYSTEMS**

(57)    The invention relates to a line cut/end detection method, which enables the detection of the end point of a fiber optic cable used in distributed acoustic systems and unexpected/unwanted breaks or interruptions in said fiber optic cable. The line cut/end detection method which is the subject of the invention, comprising the process steps of; sending a laser pulse to a fiber optic cable and collecting raw data including amplitude data for each channel, creating a data stack for each channel by repeating the raw data collection process a predetermined number of times, calculating the standard deviation values ($\sigma_c$) of amplitude values in data sets, applying $\log(\log(x))$ transformation to the obtained signal and applying a low-pass filter operation, respectively, applying an STA/LTA algorithm to the filtered signal, calculating an adaptive threshold value ($\tau$) depending on the mean ($\mu_\sigma$), standard deviation ($\sigma_\sigma$) of the obtained STA/LTA values ($\hat{\sigma}_c$) and a predetermined hyperparameter ($\beta$), obtaining the peaks exceeding the adaptive threshold value ($\tau$) and the channels related to these peaks, grouping the consecutive peaks obtained and determining the channel with the smallest channel number in the group with the largest channel number as the line cut/end candidate among said groups.

EP 4 654 493 A1

**Description**

**Technical Field**

The invention relates to a line cut/end detection method that enables the detection of the cable end point using the unprocessed signal in Distributed Acoustic Sensing (DAS) systems.

**Prior Art**

Distributed Acoustic Sensing (DAS) systems use standard telecommunications fibers to detect acoustic vibrations along the cable, capable of identifying signals at a range of up to 50 kilometers. DAS systems work on the principle of periodically measuring the phase difference scattered by Rayleigh reflections of the highfrequency laser beam sent over the fiber optic cable. By examining the time difference between the moment a beam is transmitted by a light source and the moment the measurement is taken by a measuring unit, it is possible to determine the location on the fiber optic cable where the scattered reflection originates. By correlating phase difference measurements with the corresponding spatial locations, an index called a channel is obtained that represents the acoustic activity around the loop of the fiber optic cable. As the channel value increases, the sensor moves away from the fiber optic cable and there is a fixed distance between two consecutive channels, typically 10 meters. To determine the fiber cable termination point, measurements related to electronic noise are statistically extracted and the fiber cable termination point is determined.

DAS systems find applications in various fields such as intrusion detection, facility security, pipeline security, railroad track break detection, wheel puncture detection on trains, real-time tracking of trains and vehicles, and temperature measurement.

While DAS systems continue to work for the intended application, automatic detection of faulty connections, high loss points and break points in the fiber optic cable that may affect the performance of the system and solving the detected problems is very important in terms of reducing system downtime.

In some applications in the state of the art, OTDR (Optical Time Domain Reflectometer) devices are used to detect where the signal passing through the fiber optic cable is faded and to determine the end of the fiber optic cable. However, the OTDR device and Distributed Acoustic Sensing (DAS) sensors cannot be operated at the same time.

In the prior art United States patent document numbered US2017075029A1, a method for calibrating a distributed acoustic sensing system is disclosed. In the abovementioned invention, an optical signal with one or more pulses is produced by an optical source such as a laser, the produced optical signal is transmitted to a fiber optic cable and DAS data is obtained by means of a data acquisition unit. The received DAS data is processed to obtain the phase information of the data, then passed through a low-pass filter to extract only the low-frequency components in the DAS data, the standard deviation of the data obtained for each depth is calculated, the peaks in the calculated standard deviations are determined, and the end of the fiber cable can be detected using the de-energization detection algorithm. A STA/LTA ratio technique or other known techniques can be used by the power outage detection algorithm to detect the location where the data outage occurred.

In the international patent document numbered WO2023220449A1 in the known state of the art, a method for monitoring the normal and abnormal state of a distributed fiber optic sensor cable positioned above and below the ground surface is disclosed. In said document, special filtering and temporal smoothing procedures are used based on signal properties in the spatial-temporal-frequency domains using an artificial intelligence engine. The document uses change point detection methods such as the short-term average / long-term average (STA/LTA) method to determine whether the position state has changed.

However, in the known state of the art, there is no process of suppressing the peaks and performing adaptive thresholding to make the change point due to the line cut/end evident. Therefore, there is a need for a line cut/end detection method that eliminates the problems of the known state of the art, makes the change point due to the line cut/end explicit and provides a more robust estimation of the line cut/end by adaptive thresholding.

**Brief Description of the Invention**

The purpose of the invention is to realize a line cut/end detection method that enables the detection of the end point of a fiber optic cable used in distributed acoustic systems and unexpected/unwanted breaks or interruptions in the fiber optic cable in question.

The line cut/end detection method defined in the first claim and the claims dependent on this claim, which is realized in order to achieve the purpose of this invention, comprising the process steps of; generating a laser pulse by a laser light source and sending the same to a fiber optic cable, detecting laser pulses reflected from a fiber optic cable by an optical sensor and transmitting them to a control unit, and generating raw data containing amplitude data for a plurality of channels associated with the sections in question according to the laser pulse reflected from different sections of the fiber optic cable by the control unit,

creating data stack containing a large number of amplitude data for each channel by the control unit by repeating the raw data generation process for a predetermined number of laser pulses,

calculating the standard deviation of the amplitude values in the generated data stacks by the control unit and creating the first signal that contains the standard deviation value of each channel,

taking the logarithm of the first signal generated twice in succession, obtaining a second signal containing peak suppressed amplitude data for each channel, passing the obtained second signal obtained passed through a low-pass filter, applying a STA/LTA algorithm to the filtered signal to strengthen the change points in the filtered signal, obtaining a third signal containing a STA/LTA value for each channel,

calculating an adaptive threshold value depending on the mean value of the obtained STA/LTA values, the standard deviation value and a predetermined hyperparameter,

detecting the peaks of the third signal that exceed the adaptive threshold value and the channels related to these peaks,

grouping the consecutive channels of the peaks obtained and determining a candidate group among the groups with a channel number higher than the others and determining a channel with a lower channel number than the others among the channels in the determined candidate group as a line cut/end candidate.

The log(log(x)) transformation performed in the method of line cut/end detection allows the change points caused by the line cut/end to be highlighted and, in addition, an adaptive thresholding process based on the mean value of the STA/LTA values, the standard deviation value and a predetermined hyperparameter is performed to predict the line cut/end in a more robust way.

**Detailed Description of the Invention**

The line cut/end detection method implemented to achieve the purpose of this invention is shown in the attached figures, in which;

**Figure 1-** Flow diagram of an application of the line cut/end detection method which is the subject of the invention.
**Figure 2** - A graph of a raw signal collected at a time instant showing the amplitude value for each channel.
**Figure 3** - A graph showing the standard deviation of the amplitude values for each channel of N1 raw signals.
**Figure 4** - A graph showing the peaks of the signal suppressed after applying the log(log(x)) transform to the signal in Figure 3.
**Figure 5** - A graph showing the smoothed version of the signal in Figure 4 after it has been filtered using low-pass filtering.
**Figure 6** - A graph showing the strengthened version of the change points in the signal in Figure 5 after the STA/LTA algorithm is applied to the signal in question.
**Figure 7** - A graph showing the groups of line cut/end candidates containing the peaks detected after applying adaptive thresholding to the signal in Figure 6.
**Figure 8** - A graph showing the candidate line cut/end channel corresponding to the leftmost peak of the rightmost group of the signal in Figure 7.
**Figure 9** - A graph showing the histogram of candidate line cut/end channel indices collected for N2 iterations.
**Figure 10** - A graph showing the expected value of the line cut/end channel index.

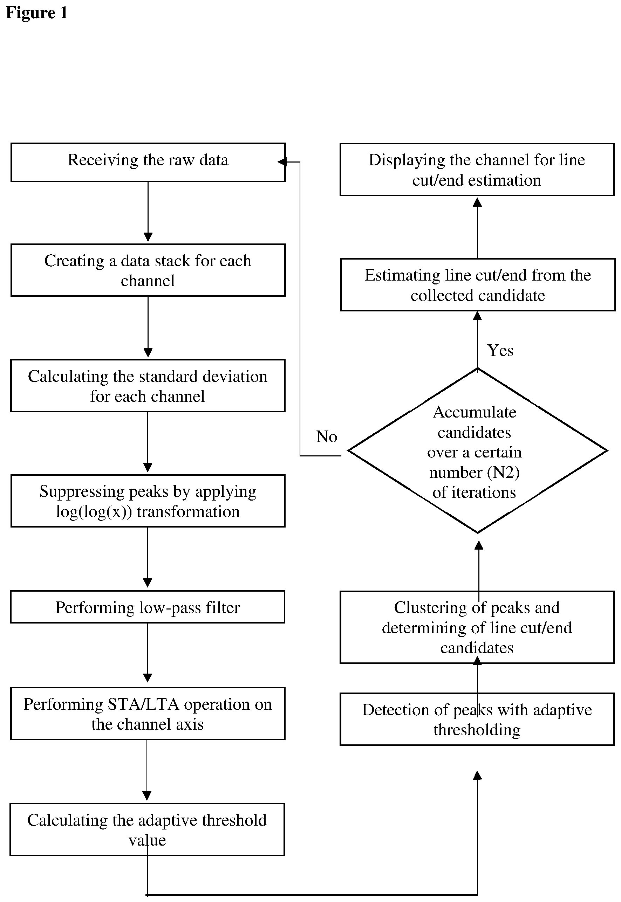

The flow diagram shown in Figure 1 and in the explanations to be made hereinafter regarding the line cut/end detection method which is the subject of the invention are as follows:

Line cut/end detection method
Receiving raw data
Creating data stacks for each channel
Calculating the standard deviation value for each channel
Suppressing peaks by applying log(log(x)) transformation
Performing low-pass filter
Performing STA/LTA operation on the channel axis
Calculating the adaptive threshold value
Detection of peaks with adaptive thresholding
Clustering of peaks and determining of line cut/end candidates
Accumulate candidates over a certain number of iterations

Estimating line cut/end from collected candidate
Displaying the channel for line cut/end prediction

The line cut/end detection method which is the subject of the invention, enables the detection of the end point of a fiber optic cable used in distributed acoustic systems and unexpected/unwanted breaks or interruptions in said fiber optic cable, comprising the process steps of;

sending a laser pulse to a fiber optic cable via a laser light source, detecting the signals reflected from the fiber optic cable via an optical receiver and creating a raw data containing amplitude data for a predetermined number of channels for a single laser pulse by a control unit according to the reflected signals,

generating a data stack for each channel by the control unit by repeating the raw data generation process a predetermined number of times,

obtaining a first signal containing a standard deviation value ($\sigma_c$) for each channel by calculating the standard deviation values ($\sigma_c$) of the amplitude values in the data stacks by the control unit,

applying the log(log(x)) transformation to the first signal, a second signal containing amplitude data with suppressed peaks for each channel is obtained, filtering the second signal with a low-pass filter,

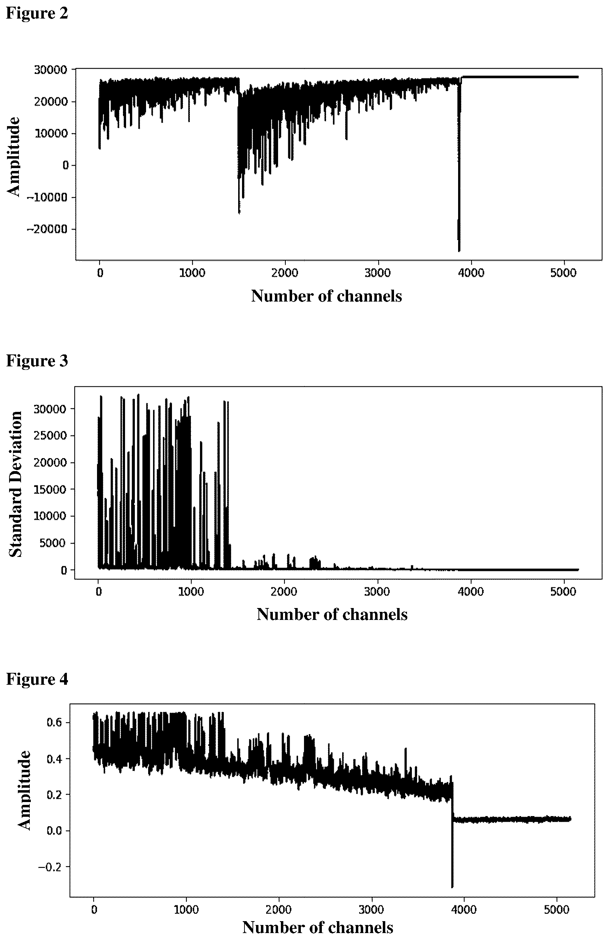

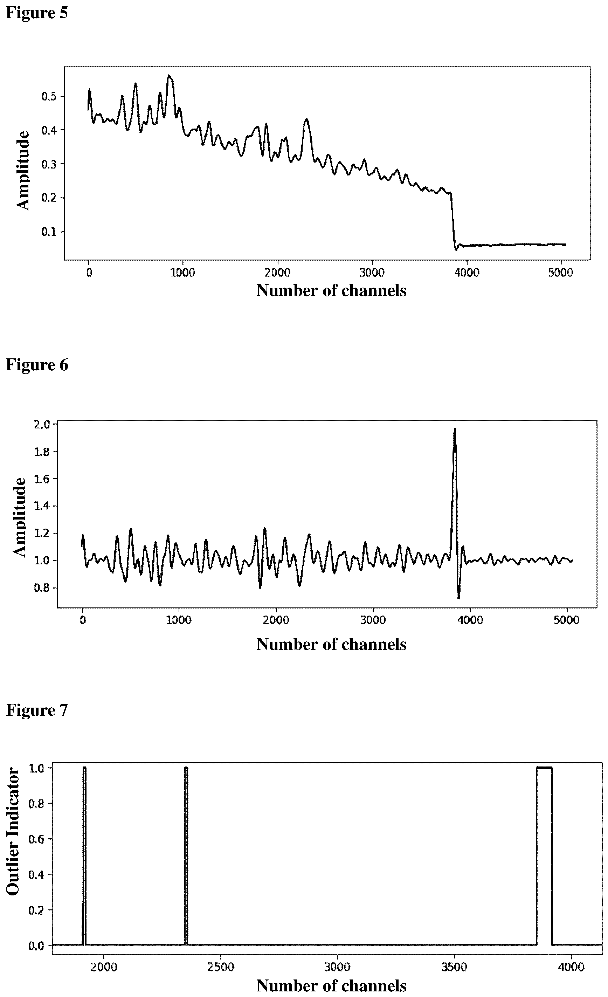

applying a STA/LTA algorithm to the filtered signal to obtain a third signal containing a STA/LTA value ($\hat{\sigma}_c$) for each channel,

calculating an adaptive threshold value ($\tau$) according to the mean ($\mu_\sigma$), standard deviation ($\sigma_\sigma$) of the obtained STA/LTA values ($\hat{\sigma}_c$) and a predetermined hyperparameter ($\beta$),

thresholding the third signal with the adaptive threshold value ($\tau$) and obtaining the peaks exceeding this threshold value and the channels related to these peaks,

grouping the consecutive peaks obtained and determining a channel with a lower channel number than the others in a group with a higher channel number than the others as a line cut/end candidate. Figure 1 shows the flow diagram of an application of the line cut/end detection method according to the invention. The said line cut/end detection method is carried out using a detection device comprising a light source adapted to periodically emit an optical pulse, such as a laser pulse of a predetermined amplitude, at a predetermined frequency, an optical receiver, such as a photodetector, adapted to detect optical pulses reflected from a fiber optic cable and to produce output signals having an amplitude corresponding to the intensity of the detected optical signals, and a control unit configured to process the optical pulses detected by the optical receiver continuously and in real time and a distributed acoustic system (DAS) comprising a fiber optic cable connected at one end to the detection device. Said fiber optic cable is used to detect acoustic vibrations along said cable. Said control unit is configured to periodically measure the phase difference scattered by Rayleigh reflections of a high frequency laser beam transmitted over the fiber optic cable, and to determine the position on the fiber optic cable from which the scattered reflection originates, according to the time difference between the moment of transmission of said laser beam and the moment when the measurement is taken, and to correlate the spatial positions corresponding to the phase difference measurements to obtain an index, called a channel, representing the acoustic activity around the loop of the fiber optic cable. There is a predetermined fixed distance (e.g. 10 meters, but the invention is not limited to this distance) between said two consecutive channels. Said control unit may be a processor unit such as a microprocessor, a microcontroller, a digital signal processor (DSP), a field programmable gate array (FPGA), an application specific integrated circuit (ASIC) in one implementation. In the line cut/end detection method, a laser pulse is first sent through a light source to a fiber optic cable of a predetermined length laid underground, and the signals and amplitudes reflected back from the fiber optic cable are detected by an optical receiver and transmitted to a control unit for processing the reflected signals. Figure 2 shows an example of raw (live) data associated with a predetermined number of channels by the control unit for a single laser pulse sent down the fiber optic cable via the light source. Each of said channels represents an index associated with one of the predetermined sections of the fiber optic line, and there is a predetermined fixed distance between the sections of the fiber optic line in question. Said raw data is a signal containing amplitude data for each channel at a time instant. In Figure 2, a raw data (signal) containing amplitude information for each of the 5150 channels is shown as an example, but the invention is not limited to the number of channels in question, and different numbers of channels can be used depending on the length of the fiber optic line laid underground. Then, a dataset consisting of a predetermined number of consecutive samples (e.g. N1) is accumulated for each channel. Thus, the amount of data to be processed for cable end detection is increased, eliminating possible false detections. In the next step, the standard deviation value ($\sigma_c$) of each data stack accumulated for each channel is calculated separately. In Figure 3, a signal example of the standard deviation values ($\sigma_c$) calculated for a data stack consisting of N1 = 400 sample data for each channel is shown. Standard deviation values ($\sigma_c$) represent the amplitude of the signal in the graph in question and are also greatly affected by other peaks other than the actual line cut/end. In Figure 3, for example, a portion of the signal in a channel near the midpoint of channels 3000 and 4000 with a standard deviation other than zero indicates the end of the line, but since the peak of the signal in this interval is not always so pronounced, this point needs to be robustly detected. The next steps of the line cut/end detection method are directed towards the robust detection of said line end. In the next step, the signal containing standard deviation values is normalized to make the peak values in the signal comparable to each other. For this, the log(log(x)) transformation is used, in other words, by taking the logarithm of the signal in question twice in succession, a signal with an amplitude value for each channel number is obtained. The "x" value specified in the log(log(x)) transformation is the standard deviation value ($\sigma_c$) of the signal for the channel to which the transformation will be applied. In this step, the peaks of the signal are suppressed by the log(log(x)) transformation applied to the signal, thus making the change point caused by the line cut/end apparent (Figure 4). After this step, the peak-suppressed signal is passed through a digital low-pass filter. This way, said signal is softened so that it can be processed more easily in future steps. A graph of the smoothed signal obtained after applying low-pass filtering to the signal shown in Figure 4 is given in Figure 5. In the next step, the STA/LTA (short time averaging / long time averaging) algorithm is used, which is a widely used technique for detecting change points in the signal. Since a standard STA/LTA algorithm detects the change point in the signal from left to right, the low-pass filtered signal is first inverted along the channel axis. Here, the first channel is replaced with the last channel, the second channel is replaced with the penultimate channel, and the other channels are similarly replaced, thus inverting said signal across the channel. Then, a STA/LTA algorithm with short-term ($w_s$) and long-term ($w_l$) window lengths is applied to the signal, respectively, to obtain a signal with amplified change points, as shown in Figure 6. The resulting signal is then inverted again along the channel axis. However, the invention is not limited to this, and an inverse STA/LTA algorithm can also be used, adapted to detect the change point in the signal from right to left, without the need to perform inversion operations along the channel axis. In the next step, adaptive thresholding is performed to detect the peaks of the signal. In this step, to detect the peaks representing the candidate line cut/end channel indices, the mean ($\mu_\sigma$) and standard deviation ($\sigma_c$) of the STA/LTA output ($\hat{\sigma}_c$) are calculated as given in Equation 1 and Equation 2, respectively. Then, as shown in Equation 3, an adaptive threshold ($\tau$) value is calculated by adding the value obtained by multiplying the standard deviation ($\sigma_c$) value with a hyperparameter (β) with the mean ($\mu_\sigma$) value.

$$\mu_\sigma = \frac{1}{M}\sum_{c=1}^{C} \hat{\sigma}_c \qquad (1)$$

$$\sigma_\sigma = \sqrt{\frac{1}{M-1}\sum_{c=1}^{C}(\hat{\sigma}_c - \mu_\sigma)^2} \qquad (2)$$

$$\tau = \mu_\sigma + \beta\sigma_\sigma \qquad (3)$$

In these equations;

β; a predetermined hyperparameter used to identify outliers depending on the characteristics of the signal,
$\hat{\sigma}_c$: STA/LTA output value,
**c:** number of channels,
**C:** total number of channels,
**M:** total number of data

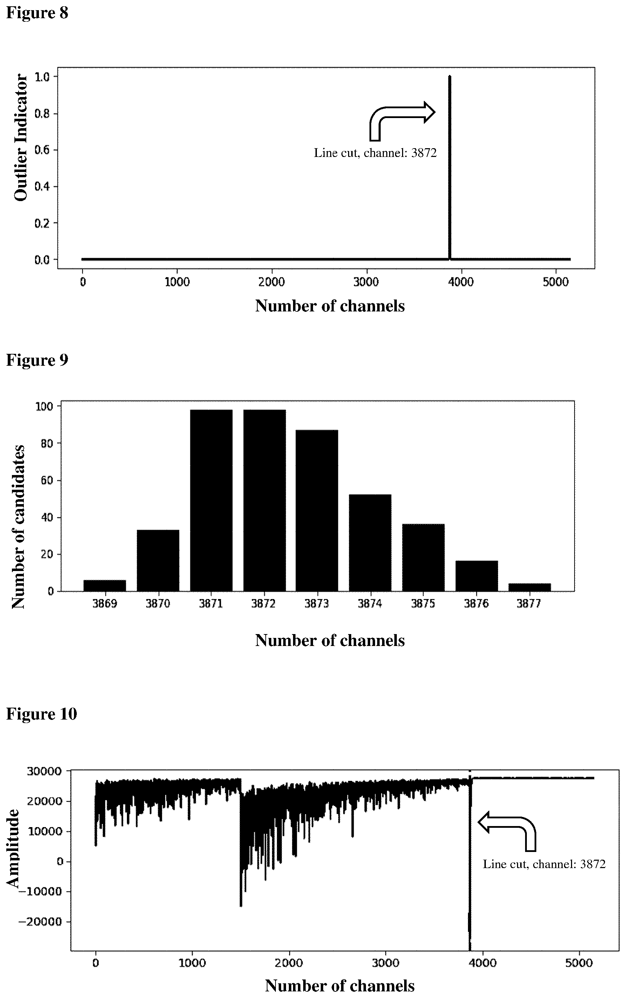

Here, said hyperparameter (β) is a predetermined value, and by changing this value, the number of outliers, in other words, the number of peaks exceeding the threshold value, can be increased or decreased. M is the number of times raw data collection is repeated a predetermined number of times (e.g. N1) to create a dataset. In the next step, a thresholding is performed on the signal using the adaptive threshold value ($\tau$) and thus, the peak values exceeding the threshold value are determined among the peak values of the signal shown in Figure 6. As a result of this thresholding, multiple peaks, some of which are consecutive, can be obtained depending on the adaptive threshold value ($\tau$) (Figure 7). A group of peaks consists of consecutive peaks. For example, three peak groups are shown in Figure 7, since most of the peaks in the channels close to the 2000th channel, the 2500th channel and the 4000th channel exceed the adaptive threshold value ($\tau$), consecutive peaks exceeding the threshold value ($\tau$) form a peak group. Among the resulting peak groups, the leftmost peak of the rightmost group represents the line cut/end candidate for that dataset (Figure 8). In other words, among the peak groups obtained, a peak with a lower channel number than the others in a group with a larger channel number than the others represents the line cut/end candidate for that dataset. In the example shown in Figure 8, channel 3872 represents the line cut/end candidate. Thus, the selection of a line cut/end candidate for a single iteration is completed.

In an embodiment of the invention, the line cut/end detection method further comprises the step of displaying the channel related to the determined line cut/end candidate on a user interface. The line cut/end candidate determined by the previously performed steps is determined as the line cut/end prediction ($c_{end}$) by the control unit and the determined line cut/end prediction ($c_{end}$) is displayed to the user via a user interface (GUI). In an embodiment, the user interface is a program displayed on a screen located on the detection device and operated by the control unit. In another embodiment, it is a program run by a desktop computer, a laptop, a tablet, a smartphone or a similar electronic device that includes a display and receives line cut/end of line estimation ($c_{end}$) information by connecting directly to the detection device via a wired or wireless data communication unit in the detection device or via a data communication network (e.g. internet).

In one embodiment of the invention, the method for determining the line cut/end further comprises the step of identifying a plurality of line cut/end candidates by repeating the operations for determining the line cut/end candidate a predetermined number of times, and determining one of said candidates as the line cut/end candidate based on the number of line cut/end candidates identified. In this application, in order to predict the final line cut/end, the steps for line cut/end candidate identification described above are repeated a predetermined number of times (e.g. N2 iterations) and the number of line cut/end candidates is accumulated and digitally recorded in a memory unit in the detection device. If the predetermined number of iterations (e.g. N2) cannot be reached during this process, the first step is returned to. After obtaining a predetermined number of line cut/end candidates, the channel with the highest number of line cut/end candidates is determined as the line cut/end prediction ($c_{end}$) by the control unit. Thus, line cut/end estimation ($c_{end}$) can be made more robustly. The resulting line cut/end estimate ($c_{end}$) is also displayed to the user via a user interface by the control unit. The steps performed in this application are repeated continuously for each predetermined number of iterations (e.g. N2) on the data received in real time from the fiber optic line.

In one embodiment of the invention, in the step of determining one of the channels as a line cut/end depending on the number of line cut/end candidates determined, the step of taking a histogram of the obtained line cut/end candidates is performed. In this step, the normalized or unnormalized histogram (Figure 9) is used and the expected value of the predetermined number of candidates (N2) is determined. The determined expected value shows the final line cut/end estimate ($c_{end}$) (Figure 10). The resulting line cut/end estimate ($c_{end}$) is also displayed to the user via a user interface by the control unit. The steps performed in this application are repeated continuously for each predetermined number of iterations (e.g. N2) on real-time data.

The present invention also relates to a detection device comprising a control unit, a light source and an optical receiver adapted to operate the line cut/end detection method described in any embodiment above.

The present invention also relates to a distributed acoustic system comprising the detection device described above. This enables robust detection of the cable cut/end in fiber optic lines in various fields such as (but not limited to) intrusion detection, facility security, pipeline security, rail break detection, wheel puncture detection in trains, real-time tracking of trains and vehicles, and temperature measurement.

By applying the log(log(x)) transformation in the method of line cut/end detection, the change points due to the line cut/end can be highlighted and an adaptive thresholding based on a predetermined hyperparameter can be applied for a more robust prediction of the line cut/end.

## Claims

1. A line cut/end detection method, which enables the detection of the end point of a fiber optic cable used in distributed acoustic systems and unexpected/unwanted breaks or interruptions in said fiber optic cable, **characterized by** comprising the process steps of;

   sending a laser pulse to a fiber optic cable via a laser light source, detecting the signals reflected from the fiber optic cable via an optical receiver and creating a raw data containing amplitude data for a predetermined number of channels for a single laser pulse by a control unit according to the reflected signals, generating a data stack for each channel by the control unit by repeating the raw data generation process a predetermined number of times,
   obtaining a first signal containing a standard deviation value ($\sigma_c$) for each channel by calculating the standard deviation values ($\sigma_c$) of the amplitude values in the data stacks by the control unit,
   applying the log(log(x)) transformation to the first signal, a second signal containing amplitude data for each channel is obtained,
   filtering the second signal with a low-pass filter,
   applying a STA/LTA algorithm to the filtered signal to obtain a third signal containing a STA/LTA value ($\hat{\sigma}_c$) for each channel,
   calculating an adaptive threshold value ($\tau$) according to the mean ($\mu_\sigma$), standard deviation ($\sigma_\sigma$) of the obtained STA/LTA values ($\hat{\sigma}_c$) and a predetermined hyperparameter ($\beta$),

thresholding the third signal with the adaptive threshold value ($\tau$) and obtaining the peaks exceeding this threshold value and the channels related to these peaks, grouping the consecutive peaks obtained, determining a group with a higher channel number than the others among said groups, and determining a channel with a lower channel number than the others among the channels in the determined group as a line cut/end candidate.

2. The line cut/end detection method according to claim 1, **characterized in that** in calculating the adaptive threshold value step, an adaptive threshold ($\tau$) is calculated based on the mean ($\mu_\sigma$) and standard deviation ($\sigma_\sigma$) of the obtained STA/LTA values ($\hat{\sigma}_c$) and a predetermined hyperparameter ($\beta$) using the equation $\tau = \mu_\sigma + \beta\sigma_\sigma$.

3. The line cut/end detection method according to claim 1 or 2, **characterized by** comprises the step of determining a plurality of line cut/end candidates by repeating the operations for determining the line cut/end candidate a predetermined number of times, and determining one of said candidates as the line cut/end candidate based on the number of line cut/end candidates determined.

4. The line cut/end detection method according to claim 3, **characterized in that** in estimating line cut/end from collected candidate step of determining one of the channels as a line cut/end candidate based on the number of line cut/end candidates determined, the step of taking a histogram of the obtained line cut/end candidates is performed.

5. The line cut/end detection method according to any one of the preceding claims, **characterized by** comprises the step of displaying on a user interface a channel for the identified line cut/end candidate.

6. The detection device comprising a control unit, a light source and an optical receiver adapted to operate a line cut/end detection method according to any one of the preceding claims.

7. A distributed acoustic system comprising a detection device according to claim 6.

**Figure 1**

```
┌─────────────────────────┐              ┌─────────────────────────┐
│   Receiving the raw data │◄──────┐      │ Displaying the channel  │
│                         │       │      │  for line cut/end       │
└─────────────────────────┘       │      │  estimation             │
            │                     │      └─────────────────────────┘
            ▼                     │                   ▲
┌─────────────────────────┐       │      ┌─────────────────────────┐
│  Creating a data stack   │       │      │  Estimating line cut/end│
│      for each channel    │       │      │  from the collected     │
└─────────────────────────┘       │      │  candidate              │
            │                     │      └─────────────────────────┘
            ▼                     │                   ▲ Yes
┌─────────────────────────┐       │             ◇ Accumulate
│ Calculating the standard │       │               candidates
│ deviation for each       │       │               over a certain
│ channel                  │       │    No         number (N2)
└─────────────────────────┘       └───────────────of iterations ◇
            │                                        ▲
            ▼                                        │
┌─────────────────────────┐              ┌─────────────────────────┐
│ Suppressing peaks by     │              │ Clustering of peaks and │
│ applying log(log(x))     │              │ determining of line     │
│ transformation           │              │ cut/end candidates      │
└─────────────────────────┘              └─────────────────────────┘
            │                                        ▲
            ▼                                        │
┌─────────────────────────┐              ┌─────────────────────────┐
│ Performing low-pass      │              │ Detection of peaks with │
│ filter                   │              │ adaptive thresholding   │
└─────────────────────────┘              └─────────────────────────┘
            │                                        ▲
            ▼                                        │
┌─────────────────────────┐                          │
│ Performing STA/LTA       │                          │
│ operation on the channel │                          │
│ axis                     │                          │
└─────────────────────────┘                          │
            │                                        │
            ▼                                        │
┌─────────────────────────┐                          │
│ Calculating the adaptive │                          │
│ threshold value          │                          │
└─────────────────────────┘                          │
            │                                        │
            └────────────────────────────────────────┘
```

**Figure 2**

**Figure 3**

**Figure 4**

**Figure 5**

**Figure 6**

**Figure 7**

**Figure 8**

**Figure 9**

**Figure 10**

Europäisches
Patentamt

European
Patent Office

Office européen
des brevets

# EUROPEAN SEARCH REPORT

**Application Number**

EP 25 17 6187

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2017/075029 A1 (CUNY THEO [GB] ET AL) 16 March 2017 (2017-03-16) * figure 8 * * paragraph [0050] * ----- | 1-7 | INV. H04B10/079 G01D5/353 G01H9/00 |
| A | WO 2023/220449 A1 (NEC LAB AMERICA INC [US]) 16 November 2023 (2023-11-16) * claim 1 * * paragraph [0068] * ----- | 1-7 | |

**TECHNICAL FIELDS SEARCHED (IPC)**

H04B
G01D
G01H

The present search report has been drawn up for all claims

| Place of search | Date of completion of the search | Examiner |
|---|---|---|
| Munich | 10 October 2025 | Inan, Beril |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 6187

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | Publication date | Patent family member(s) | | Publication date |
|---|---|---|---|---|
| US 2017075029 A1 | 16-03-2017 | NONE | | |
| WO 2023220449 A1 | 16-11-2023 | JP | 2025516720 A | 30-05-2025 |
| | | US | 2023366726 A1 | 16-11-2023 |
| | | WO | 2023220449 A1 | 16-11-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017075029 A1
- WO 2023220449 A1